# EUROPÄISCHE PATENTSCHRIFT

(11) **EP 3 414 587 B1**
(45) Veröffentlichungstag und Bekanntmachung des Hinweises auf die Patenterteilung: **01.09.2021**
(21) Anmeldenummer: 17705570.4
(22) Anmeldetag: 09.02.2017
(51) Int. Cl.: G01S 7/03, G01S 13/75, G01S 3/14, H01Q 3/24, H01Q 3/40, G06K 7/10

(54) **VORRICHTUNG ZUR BESTIMMUNG EINER POSITION EINES SENDERS**
DEVICE FOR DETERMINING A POSITION OF A TRANSMITTER
DISPOSITIF PERMETTANT DE DÉTERMINER UNE POSITION D'UN ÉMETTEUR

(30) Priorität: 12.02.2016 DE 102016202207; 20.07.2016 DE 102016213229
(43) Veröffentlichungstag der Anmeldung: 19.12.2018
(73) Patentinhaber: Fraunhofer-Gesellschaft zur Förderung der angewandten Forschung e.V., 80686 München (DE)
(72) Erfinder: SCHÜHLER, Mario, 91090 Effeltrich (DE); WEISGERBER, Lars, 02727 Ebersbach-Neugersdorf (DE); ARENDT, Johannes, 91054 Erlangen (DE); WANSCH, Rainer, 91083 Baiersdorf (DE); MILOSIU, Heinrich, 91056 Erlangen (DE); OEHLER, Frank, 91325 Adelsdorf (DE)
(74) Vertreter: Hersina, Günter
(86) Internationale Anmeldenummer: PCT/EP2017/052937
(87) Internationale Veröffentlichungsnummer: WO 2017/137524

(56) Entgegenhaltungen:
- WO-A1-2009/147662
- WO-A1-2015/121204
- US-A1- 2011 169 613

## Beschreibung

Die Erfindung bezieht sich auf eine Vorrichtung zur Bestimmung mindestens einer Information über eine Position eines Senders. Weiterhin bezieht sich die Erfindung auf ein entsprechendes Verfahren zur Bestimmung einer Information über eine Position eines Senders.

In der Logistik finden immer häufiger hochfrequente Transponder (RFID-Transponder oder RFID-Tags für "Radio-Frequency Identification") Anwendung, die eine Identifikation von Objekten erlauben. Typischerweise sind diese Transponder passiv und werden durch ein hochfrequentes elektromagnetisches Feld angeregt. Der Transponder nutzt dieses Signal und sendet in Antwort auf die Anregung ein moduliertes Signal zurück an das RFID-Lesegerät. Im Antwortsignal sind dabei Informationen des Transponders erhalten, die von dem Lesegerät ausgewertet werden können. Damit kann ein Objekt über einen Transponder eindeutig identifiziert und zugeordnet werden. Das Lesegerät ist dabei insbesondere ein sogenannter RFID-Reader, der die Antwortsignale von RFID-Transpondern empfängt und verarbeitet. Die Verarbeitung besteht dabei im Allgemeinen darin, dass die übertragenen Daten extrahiert und auch die Signalstärke als einer physikalischen Eigenschaft des Antwortsignals bestimmt wird. Die übertragenen Daten beziehen sich je nach Ausgestaltung des RFID-Transponders z. B. auf Identifikationsdaten oder auf Messdaten usw.

Neben der Identifikation von Objekten ist auch die Lokalisierung der Objekte wünschenswert. Zunächst ist dazu eine Richtungsinformation zu ermitteln, die Auskunft darüber gibt, aus welcher Richtung relativ zur Position des Lesegeräts der Transponder seine Antwort zurücksendet. Durch Einsatz eines weiteren Lesegeräts, das räumlich getrennt von dem ersten ist, können die Richtungsinformationen beider herangezogen werden, um auch den Ort des Objekts in einer Ebene zu ermitteln. Eine räumliche Lokalisierung im dreidimensionalen Raum erfordert ein drittes Lesegerät.

Mit Hilfe dieser hochfrequenten Identifikation von Objekten und deren Lokalisierung können beispielweise verschiedene Warenflussprozesse bedient und optimiert werden wie z. B. im Bereich der Logistik oder der Produktion. Im Falle der automatisierten Erfassung von Objekten auf einer Palette, die durch eine Tordurchfahrt bewegt werden, erlaubt die Lokalisierung das automatische Erkennen der Richtung; Ein- und Ausfahrt lassen sich dadurch unterscheiden. Eine weitere Anwendung ist das Auffinden von mit RFID-Transpondern versehenen Waren innerhalb eines Lagers.

Um mithilfe der Lesegeräten und der Signalinformationen der erkannten Transponder eine Richtungsinformation zu erhalten, ist für die Auswertung eine Daten- bzw. Informationsverbindung zu den Lesegeräten oder eine einsprechende Software und/oder Hardware im Lesegerät selbst erforderlich.

Bei Lesegeräten mit nur einem Anschluss (eine andere Bezeichnung ist Tor) wird in der Regel eine Antenne bestehend aus einem einzelnen Strahler angeschlossen. Dies ermöglicht lediglich die Erfassung von Transpondern, eine eindeutige Richtungsinformation kann damit nicht ermittelt werden.

Bei manchen Lesegeräten sind mehrere Anschlüsse vorhanden, an die sich jeweils eine Antenne anschließen lässt. Über die jeweilige Antenne wird das hochfrequente Anregungssignal ausgesendet und werden die Antwortsignale der Transponder empfangen. Zwischen den Antennen mit in der Regel einem Strahler als Antennenelement wird typischerweise innerhalb des Lesegeräts sequentiell umgeschaltet. Durch eine örtliche Verteilung der Antennen kann auf die Lage der Transponder geschlossen werden. Allerdings ist die Richtungsinformation sehr ungenau bzw. mehrdeutig und zudem geht mit der Verteilung der Antennen ein hoher Platzbedarf und somit ein hoher Installationsaufwand einher.

Eine Richtungsschätzung ist beispielsweise mit bekannten Algorithmen wie MUSIC ("Multiple Signal Characterization") oder ESPRIT ("Estimation of Signal. Parameters via Rotational Invariance Technique") möglich. Dazu sind jedoch von den Antennensignalen, d. h. von den empfangenen Signalen die Signalamplitude und die Phase zu ermitteln. Typische RFID-Lesegeräte hingegen bieten diese Möglichkeit nicht, da sie zu jedem identifizierten Transponder lediglich ein Maß für die Amplitude der empfangenen Feldstärke liefern - im Englischen spricht man von "received signal strength indication" (RSSI).

In [1] wird ein RSSI-basiertes Verfahren zur Richtungsbestimmung in drahtlosen Netzwerken vorgestellt. Durch sukzessives Umschalten von Strahlungsdiagrammen mit abnehmender Keulenbreite kann der zu findende Sender einem Sektor zugeordnet werden. Die Auflösungsgenauigkeit der Einfallsrichtung ist dabei jedoch durch die schmalste Keulenbreite gegeben, was zu großen Antennenaperturen bzw. aufwendigen Keulenformungsnetzwerken führt.

Auch der in [2] präsentierte Ansatz ist hinsichtlich der Auflösungsgenauigkeit von der Keulenbreite abhängig. Eine fest eingestellte Hauptkeule wird dabei mechanisch geschwenkt, bis die Richtung mit dem stärksten RSSI-Wert gefunden wurde.

Ein weiteres RSSI-basiertes Verfahren zeigt [3]. Hier wird durch die räumliche Anordnung der Antennen eine Zuordnung zwischen RSSI-Wert und Raumrichtung erreicht. Die Auflösung ist dabei abhängig von der Keulenbreite der einzelnen Strahler.

Ein RSSI-basierter Ansatz in Kombination mit dem Richtungsschätzalgorithmus MUSIC wird in [4] vorgestellt. Durch die Suche nach dem geeigneten Steering-Vektor wird auf die Signalkovarianzmatrix geschlossen, ohne dass eine Phaseninformation gemessen wird. Die Genauigkeit des Ansatzes hängt stark mit der Richtwirkung der einzelnen Antennen zusammen.

In der Patentschrift US 8,433,337 B2 wird ein Ansatz gezeigt, bei dem die Signale von zwei Antennen über einen 90°-Hybrid-Koppler und einen zusätzlichen schaltbaren Phasenschieber auf vier verschiedene Arten miteinander kombiniert werden. Die Phaseninformation wird dadurch in eine Amplitudeninformation umgewandelt, so dass sich aus den RSSI-Werten auf die Phasenbeziehung zwischen zwei Antennen schließen lässt. Auch bei mehr als zwei Antennen erfolgt stets eine paarweise Kombination, während die verschiedenen Paare nacheinander durchgeschaltet werden. Im Grunde wird also zwischen verschiedenen Richtcharakteristiken gewechselt. Allerdings weisen die Richtcharakteristiken eine geringe Richtwirkung auf, da lediglich zwei Elemente gleichzeitig "aktiv" sind. Unter Berücksichtigung von Rauschen können daher Mehrdeutigkeiten auftreten, die eine Richtungsbestimmung unmöglich machen können. Auch hier hängt die Genauigkeit von der Richtwirkung der Einzelelemente ab.

In [5] werden die Signale von vier Antennen kombiniert. Die Antennen werden über eine sogenannte Butler-Matrix an ein RFID-Lesegerät angeschlossen. Innerhalb des Lesegeräts wird zwischen den Eingangstoren der Butler-Matrix umgeschaltet. Aus den RSSI-Werten und den Eigenschaften der Butler-Matrix lässt sich auf den Einfallswinkel innerhalb einer Ebene schließen. Eine Richtungsbestimmung in zwei Dimensionen ist damit nicht möglich. Weitere Details zu der Butler-Matrix finden sich beispielsweise in der Patentschrift US 4,638,317.

Die US 2011/0169613 A1 bezieht sich auf ein tragbares RFID-Lesegerät. Das tragbare RFID-Lesegerät umfasst eine aktive Antennenanordnung mit einer Vielzahl von Antennenelementen zum Empfangen von RFID-Signalen von RFID-Geräten. Die Antennenelemente umfassen eine Steuerschaltung zum Steuern eines von der aktiven Antennenanordnung erzeugten Strahlmusters. Das tragbare RFID-Lesegerät enthält ferner eine Summenschaltung und eine Differenzschaltung, wobei die Summenschaltung ein Summensignal durch Summieren der von mindestens zwei der Vielzahl von Antennen empfangenen RFID-Signale bestimmt, während die Differenzschaltung ein Differenzsignal zwischen den RFID-Signalen bestimmt, die von wenigstens zwei der Mehrzahl von Antennenelementen empfangen werden. Das tragbare RFID-Lesegerät umfasst ferner eine Steuerungseinrichtung, um das Strahlmuster elektronisch zu steuern und eine Richtung von dem RFID-Lesegerät zu einem bestimmten RFID-Gerät zu bestimmen.

Die WO 2009/147662 A1 beschreibt eine Vorrichtung zur Ermittlung der Richtung eines Ziels, wobei die Signale von mehreren Antennenelementen verwendet werden.

Eine kommerzielle Lösung zur Ein- bzw. Ausfuhrkontrolle, bei gleichzeitiger Erfassung der Transponderinformationen, wird durch ein RFID-Lesesystem (bestehend aus Reader, Antenne und Interface) der Firma Kathrein® zur Verfügung gestellt (siehe [6]). Dieses System besteht aus einem Lesegerät mit eingebetteten Antennen, welches durch ein zusätzliches Interface gesteuert wird. Diese Lösung ist allerdings lesegerätabhängig. Die Antenne selbst ist nicht für den Einsatz bei bestehenden Lesegeräten oder von anderen Herstellern stammenden Lesegeräten geeignet.

In der Regel sind die meist kostenintensiven Lesegeräte bereits in den entsprechenden Umgebungen installiert und sollen wegen der damit verbundenen Kosten nicht vollständig ersetzt werden.

Eine weitere Möglichkeit, Signalinformationen aus den schwachen Transpondersignalen für die Richtungsschätzung zu erhalten, bietet das Auskoppeln der Signale, so dass sich zusätzlich noch die Phase der Signale ermitteln lässt. Dadurch wird jedoch die für das Lesegerät bereitgestellte Signalleistung reduziert und somit die Anzahl der erkennbaren Transponder bzw. die Leistungsfähigkeit des Lesegeräts gesenkt.

Die Aufgabe der Erfindung besteht daher darin, eine Vorrichtung vorzuschlagen, die es erlaubt, aus den Signalen von Sendern übertragene Daten abzuleiten und auch eine Information über die Position der Sender zu ermitteln.

Die Erfindung löst die Aufgabe durch eine Vorrichtung zur Bestimmung mindestens einer Information über eine Position eines Senders. Dabei weist die Vorrichtung eine Antennenvorrichtung, eine Kontrollvorrichtung, eine Datenverarbeitungsvorrichtung und eine Informations-Lesevorrichtung auf. Die Antennenvorrichtung weist mehrere unterschiedliche Richtcharakteristiken auf. Die Antennenvorrichtung weist ein Speisenetzwerk auf, wobei das Speisenetzwerk unterschiedliche Richtcharakteristiken der Antennenvorrichtung bewirkt und derartig ausgestaltet ist, mit der Antennenvorrichtung empfangene Signale in die einzelnen Richtcharakteristiken zu separieren. Die Richtcharakteristiken beziehen sich jeweils auf eine Menge an räumlich unterschiedlichen Empfangsempfindlichkeiten der Antennenvorrichtung. Die Antennenvorrichtung weist mehrere Signalausgänge auf, wobei die Richtcharakteristiken den Signalausgängen zugeordnet sind. Die Kontrollvorrichtung ist derartig ausgestaltet, einen Signalausgang der Antennenvorrichtung mit der Informations-Lesevorrichtung und weitere Signalausgänge der Antennenvorrichtung mit der Datenverarbeitungsvorrichtung zu verbinden. Die Informations-Lesevorrichtung ist derartig ausgestaltet ist, aus empfangenen Signalen mit den Signalen übertragene Daten zu ermitteln, wobei die Datenverarbeitungsvorrichtung derartig ausgestaltet ist, die empfangenen Signale in Hinblick auf die Richtung des Senders, in welcher dieser relativ zur Antennenvorrichtung positioniert ist, auszuwerten. Die Vorrichtung ist dadurch gekennzeichnet, dass die Kontrollvorrichtung derartig ausgestaltet ist, die Informations-Lesevorrichtung abwechselnd mit unterschiedlichen Signalausgängen der Antennenvorrichtung und jeweils weitere Signalausgänge der Antennenvorrichtung mit der Datenverarbeitungsvorrichtung zu verbinden.

In einer Ausgestaltung ist die Informations-Lesevorrichtung eine Komponente der Vorrichtung.

Die erfindungsgemäße Vorrichtung verfügt somit über eine Antennenvorrichtung, die mehrere Richtcharakteristiken aufweist. Das bedeutet, dass die Antennenvorrichtung je nach ausgewählte Richtcharakteristik mit jeweils räumlich unterschiedlichen Empfindlichkeiten Signale empfängt. Oder mit anderen Worten: je nach Richtcharakteristik werden Signale aus unterschiedlichen Raumbereichen bevorzugt. Die Richtcharakteristiken sind den Signalausgängen zugeordnet. Eine Kontrollvorrichtung verbindet einen Signalausgang mit einer Informations-Lesevorrichtung und verbindet weitere Signalausgänge mit der Datenverarbeitungsvorrichtung. Dabei unterscheiden sich die Informations-Lesevorrichtung und die Datenverarbeitungsvorrichtung zumindest darin voneinander, dass die Informations-Lesevorrichtung derartig ausgestaltet ist, aus dem ihr zugeführten Signal Daten zu ermitteln, die mit dem Signal übertragen werden. Der Sender strahlt somit Signale aus, die auch Informationen tragen, z. B. zur Identifizierung des Senders oder in Form von Messwerten oder z. B. in Form von weitergeleiteten Daten. Je nach der Art des Senders ist die Informations-Lesevorrichtung somit beispielsweise ein RFID-Lesegerät für einen RFID-Transponder als Sender oder ein Satelliten-Receiver für Satelliten-Signale bei einem Satelliten als Sender. Entsprechendes gilt auch für den Mobilfunk. Die Datenverarbeitungsvorrichtung dient zur Auswertung der empfangenen Signale im Hinblick auf die Richtung des Senders, in welcher dieser relativ zur Antennenvorrichtung positioniert ist, und zur Ermittlung der physikalischen Eigenschaften der Signale. In einer Ausgestaltung erlaubt die Datenverarbeitungsvorrichtung auch das Extrahieren von Daten aus den Signalen. In einer alternativen Ausgestaltung erlaubt die Datenverarbeitungsvorrichtung es nicht, Daten aus den Signalen zu extrahieren, so dass in dieser Ausgestaltung die Datenverarbeitungsvorrichtung auch weniger Intelligenz benötigt bzw. einfacher ausgestaltet sein kann. Die Datenverarbeitungsvorrichtung dient daher in der letztgenannten Ausgestaltung nur der Auswertung der empfangenen Signale im Hinblick auf die Richtung des Senders, in welcher dieser relativ zur Antennenvorrichtung positioniert ist, und der Ermittlung der physikalischen Größen der empfangenen Signale.

Dies ist beispielsweise die Signalamplitude oder die Phase der empfangenen Signale. Aufbauend auf diesen physikalischen Daten lässt sich dann die Information über die Position des Senders ermitteln, z. B. in Anwendung der Triangulation.

Insgesamt beschreibt die Erfindung eine lesegerät-unabhängige Lokalisierungslösung, welche in einer Ausgestaltung zum Anregen ein Lesegerät benötigt. Die Antennenvorrichtung und die Auswertung der zusätzlichen empfangenen Signale liefert insgesamt die Richtungsinformation über den Sender als Ergänzung zu der Auswertung der Sendersignale in Hinblick auf die übertragenen Daten bzw. Informationen.

In einer Ausgestaltung weist die Vorrichtung zwei Informations-Lesevorrichtungen auf, die von der Kontrollvorrichtung entsprechend mit den Signalausgängen der Antennenvorrichtung verbunden werden.

In einer Ausgestaltung ist die Antennenvorrichtung insbesondere so ausgestaltet, dass die Antennenvorrichtung stets mit mehreren Richtcharakteristiken Signale empfängt. Die Antennenvorrichtung verfügt in einer Ausgestaltung über mehrere Antennenelemente, die unterschiedlichen Richtcharakteristiken zugeordnet sind, und die ständig das Empfangen von Signalen ermöglichen.

In einer Ausgestaltung ist jeder Richtcharakteristik ein Signalausgang der Antennenvorrichtung zugeordnet.

Eine Ausgestaltung besteht darin, dass die Informations-Lesevorrichtung derartig ausgestaltet ist, sowohl aus den empfangenen Signalen die mit den Signalen übertragenen Daten zu ermitteln als auch die empfangenen Signal hinsichtlich ihrer physikalischen Eigenschaften auszuwerten. In dieser Ausgestaltung extrahiert die Informations-Lesevorrichtung Informationen bzw. Daten aus den empfangenen Signalen und ermittelt zudem noch mindesten eine Aussage über physikalische Eigenschaften des Signals. Handelt es sich bei der Informations-Lesevorrichtung beispielsweise um ein RFID-Lesegerät (oder RFID-Reader), so werden nicht nur die übertragenen Daten ermittelt, sondern es wird auch ein RSSI-Wert für die Signalamplitude generiert.

In einer Ausgestaltung ist vorgesehen, dass die Datenverarbeitungsvorrichtung derartig ausgestaltet ist, die empfangenen Signale nur hinsichtlich ihrer physikalischen Eigenschaften auszuwerten. Die Datenverarbeitungsvorrichtung kann somit aus den empfangenen Signalen keine Informationen ermitteln, die damit übertragen worden sind. Nimmt man wieder das obige Beispiel der RFID-Transponder, so sind die ausgesendeten RFID-Signale für die Datenverarbeitungsvorrichtung nur elektromagnetische Signale, die keine weitere Information tragen.

Eine Ausgestaltung besteht darin, dass die Antennenvorrichtung mehrere Antennenelemente aufweist. Dabei weisen die Antennenelemente jeweils eine Richtcharakteristik auf. Schließlich sind die Signalausgänge mit unterschiedlichen Antennenelementen verbunden. Dies ist eine Variante, durch die den Signalausgängen die den zugeordneten Richtcharakteristiken zugeordneten Signale separat zugehen. Die Antennenelemente sind in einer Ausgestaltung Elemente einer Patch-Antenne. In alternativen Ausgestaltungen handelt es sich um Dipolantennen, Monopolantennen, monopol-artige Antennen, Chip-Antennen oder um Schleifenantennen.

Wie bereits dargelegt ist erfindungsgemäß vorgesehen, dass die Antennenvorrichtung ein Speisenetzwerk aufweist und dass das Speisenetzwerk unterschiedliche Richtcharakteristiken der Antennenvorrichtung bewirkt. Das Speisenetzwerk dient damit dem Erzeugen der Richtcharakteristiken.

Das Speisenetzwerk ist derart ausgestaltet, mit der Antennenvorrichtung empfangene Signale in die einzelnen Richtcharakteristiken zu separieren. In dem Speisenetzwerk ist daher in einer Ausgestaltung insbesondere eine Butler-Matrix realisiert, die der Auftrennung der empfangenen Signale in die einzelnen Richtcharakteristiken dient.

In einer Ausgestaltung ist vorgesehen, dass die Antennenvorrichtung als Mehrkeulenantenne ausgestaltet ist. Eine alternative Bezeichnung ist Multibeam-Antenne. Die Richtcharakteristiken zeichnen sich dabei durch zumindest eine ausgeprägte Keule in Bezug auf die Empfangsempfindlichkeit aus.

Eine Ausgestaltung besteht darin, dass mindestens eine der Richtungscharakteristiken sich zumindest in Hinblick auf die Ausrichtung der Keulen von den anderen unterscheidet. Die Antennenvorrichtung der vorgenannten Ausgestaltungen erlaubt somit die Schaltung von unterschiedlichen Richtcharakteristiken bzw. das Empfangen von Signalen mit unterschiedlichen Richtcharakteristiken, die jeweils eine Keule aufweisen. In einer Ausgestaltung sind die Keulen insbesondere in unterschiedliche Richtungen ausgerichtet. Die Mehrkeulenantenne erlaubt somit den Empfang aus jeweils unterschiedlichen Raumbereichen, die sich hauptsächlich durch die Orientierung der (Haupt-)Keulen voneinander unterscheiden. Durch den damit einhergehenden reduzierten Raumbereich und das Wissen um die Ausrichtung der Keulen lässt sich daher die Information über die Position des Senders ermitteln.

In einer Ausgestaltung wird insgesamt ausgenutzt, dass unter Verwendung einer Mehrkeulenantenne, welche durch ein Speisenetzwerk (wie eine Butler-Matrix) und deren Signalpfade angeregt wird, im Empfangsfall Amplitudeninformationen und Phaseninformationen gewonnen werden. Speisenetzwerke wie Butler-Matrizen werden in der Regel bei n * m oder n * n Mehrkeulenantennen angewendet. Die Antennenelemente oder die eigentliche Antenne hat dabei n Signalausgänge, die zu dem Speisenetzwerk geführt sind und von dem Speisenetzwerk auf m Signalausgaben geführt werden.

In einer Ausgestaltung ist vorgesehen, dass die Richtungscharakteristiken sich teilweise überlappen. In einer alternativen Ausgestaltungen sind zumindest mehrere Keulen der unterschiedlichen Richtcharakteristiken ohne Überlapp.

Wie bereits dargelegt ist die Kontrollvorrichtung erfindungsgemäß derartig ausgestaltet, die Informations-Lesevorrichtung abwechselnd mit unterschiedlichen Signalausgängen der Antennenvorrichtung zu verbinden. Da die Signalausgänge mit unterschiedlichen Richtcharakteristiken verbunden sind, werden in dieser Ausgestaltung der Informations-Lesevorrichtung somit Signale aus unterschiedlichen Raumbereichen zugeführt.

Erfindungsgemäß ist vorgesehen, dass die Datenverarbeitungsvorrichtung derartig ausgestaltet ist, die empfangenen Signale in Hinblick auf die Richtung des Senders auszuwerten. In dieser Ausgestaltung wird zumindest ermittelt aus welcher Richtung relativ zur Antennenvorrichtung der Sender positioniert ist. In einer weiteren Ausgestaltung wird die Position oder zumindest der Raumbereich des Senders ermittelt.

Eine Ausgestaltung besteht darin, dass die Vorrichtung eine Signalquelle aufweist und dass die Signalquelle derartig ausgestaltet ist, ein Anregungssignal zu erzeugen, das die Antennenvorrichtung abstrahlt. Insofern es sich bei den Sendern um passive Komponenten, wie beispielsweise RFID-Transponder handelt, erhalten diese durch die Signalquelle ein Aufwecksignal bzw. die notwendige Energie, um Signale aussenden zu können. In einer Ausgestaltung ist die Signalquelle insbesondere ein Bestandteil der Informations-Lesevorrichtung. In einer Ausgestaltung sendet die Informations-Lesevorrichtung das Anregungs- oder Aufwecksignal mit der gleichen Richtcharakteristik, mit der die Antwortsignale empfangen werden, die dem Informations-Lesevorrichtung zugeführt werden. Somit werden die Sender aktiviert, von denen auch die Antwortsignal primär empfangen werden. In einer Ausgestaltung ist vorgesehen, dass es sich bei dem Sender um einen Radio Frequency Identifikation-Transponder handelt. Der Sender ist daher ein RFID-Transponder oder RFID-Tag und die Informations-Lesevorrichtung ist korrespondierend ein RFID-Reader (bzw. RFID-Lesegerät), der insbesondere auch die Signalquelle aufweist, um die RFID-Transponder zu aktivieren. Insofern die Informations-Lesevorrichtung das Aktivierungssignal mit einer Richtcharakteristik aussendet, werden auch nur die RFID-Transponder innerhalb des zugeordneten Raumbereichs aktiviert.

Eine Ausgestaltung besteht darin, dass es sich bei dem Sender um einen Satelliten handelt. Entsprechend handelt es sich bei der Informations-Lesevorrichtung um einen Satelliten-Receiver, der die Satelliten-Signale empfängt und damit übertragene Daten extrahiert.

Wie bereits dargelegt ist erfindungsgemäß vorgesehen, dass die Kontrollvorrichtung derartig ausgestaltet ist, die Informations-Lesevorrichtung abwechselnd mit unterschiedlichen Signalausgängen der Antennenvorrichtung und jeweils weitere Signalausgänge der Antennenvorrichtung mit der Datenverarbeitungsvorrichtung zu verbinden. Es wird also jeweils ein Signalausgang mit der Informations-Lesevorrichtung verbunden und es werden jeweils verbleibende Signalausgänge werden mit der Datenverarbeitungsvorrichtung verbunden.

Im Einzelnen gibt es eine Vielzahl von Möglichkeiten, die erfindungsgemäße Vorrichtung auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:
- Fig. 1: eine schematische Darstellung einer erfindungsgemäßen Vorrichtung und deren Anwendung und
- Fig. 2: eine Prinzip-Skizze zur Verdeutlichung eines Verfahrens.

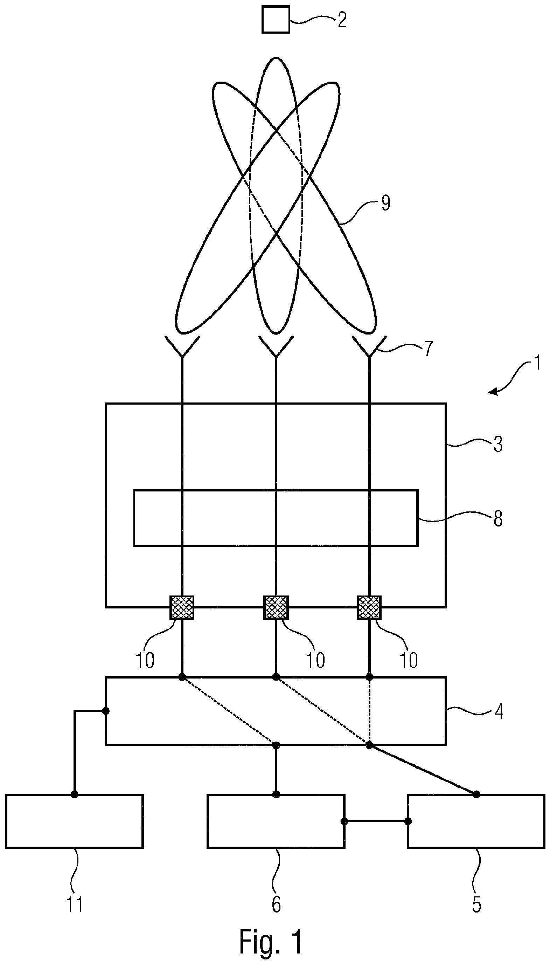

Die Fig. 1 zeigt eine schematische Ausgestaltung der erfindungsgemäßen Vorrichtung 1, die der Bestimmung der Position des Senders 2 dient. Dafür verfügt die Vorrichtung 1 über eine Antennenvorrichtung 3, die hier beispielhaft drei Antennenelemente 7 aufweist.

Die Antennenelemente 7 sind mit den Ausgängen eines Speisenetzwerks 8 verbunden. Über das Speisenetzwerk 8 lassen sich die jeweils mit den Antennenelementen 7 verbundenen Richtcharakteristiken 9 erzeugen und mit der Kontrollvorrichtung 4 schalten. Für das Senden z. B. von Anregungssignalen lassen sich die Richtcharakteristiken auch überlagern, was sich entsprechend in der Signalformung auswirkt. Empfängt die Antennenvorrichtung 3 umgekehrt Signale, so werden diese durch das Speisenetzwerk 8 in die einzelnen Richtcharakteristiken aufgespalten und einzeln über die Signalausgänge 10 ausgegeben. Daher verfügt die Antennenvorrichtung 3 in dem gezeigten Beispiel bei drei Antennenelementen 7 bzw. drei Richtcharakteristiken 9 auch über drei Signalausgänge 10. Für die weitere Signalverarbeitung ist die Kontrollvorrichtung 4 vorhanden, die die Signalausgänge 10 mit der Informations-Lesevorrichtung 6 bzw. mit der Datenverarbeitungsvorrichtung 5 verbindet. Hier verbindet die Kontrollvorrichtung 4 einen Signalausgang mit der Informations-Lesevorrichtung 6 und die verbleibenden Signalausgänge 10 mit der Datenverarbeitungsvorrichtung 5.

Die Informations-Lesevorrichtung 6 und die Datenverarbeitungsvorrichtung 5 verarbeiten beide die empfangenen Signale und werten sie aus. In der gezeigten Ausgestaltung werten beide Vorrichtungen 5, 6 die Signale hinsichtlich ihrer physikalischen Eigenschaften aus. So bestimmen z. B. beide Vorrichtungen 5, 6 einen Betrag der Feldstärke der Signale oder ggf. auch die Phasenwerte der an sich komplexen Signale. Der Unterschied besteht jedoch darin, dass nur die Informations-Lesevorrichtung 6 auch eine Information aus den Signalen extrahiert, die von den Signalen als Daten übertragen werden. D. h. nur die Informations-Lesevorrichtung 6 kann z. B. aus den Signalen Identifikationskennzeichen oder z. B. digitale Informationen extrahieren. Diese höhere Auswertung leistet die Datenverarbeitungsvorrichtung 5 in der dargestellten Ausgestaltung nicht und wertet die Signale nur z. B. hinsichtlich der Amplitude oder der Phase aus. In einer alternativen - nicht dargestellten - Ausgestaltung verfügt die Datenverarbeitungsvorrichtung 5 ebenfalls über die Fähigkeit, Daten zu extrahieren.

Die dargestellte Vorrichtung 1 insgesamt erlaubt die Auswertung der empfangenen Signale hinsichtlich ihrer physikalischen Eigenschaften und in Hinblick auf die Information über die Position des Senders 2 aus.

In dem gezeigten Beispiel handelt es sich jeweils um gleichzeitig empfangene Signale, die sich durch eine Abstrahlung des Senders 2 ergeben.

Die Datenverarbeitungsvorrichtung 5 erhält hier auch von der Informations-Lesevorrichtung 6 Daten (z. B. den ermittelten RSSI-Wert), um insgesamt die Information über die Position des Senders 2 oder zumindest über die Richtung zu ermitteln.

Da im gezeigten Beispiel der Sender 2 ein passiver Sender in Form eines RFID-Transponders ist, verfügt die Vorrichtung 1 zusätzlich noch über eine Signalquelle 11, die ein Anregungssignal erzeugt, was über die Antennenvorrichtung 3 abgestrahlt und von dem Sender 2 empfangen wird, um seinerseits die Signale abstrahlen zu können. Dabei ist die übertragene Information zumindest eine Identifikationskennung des Senders 2.

In einer alternativen - nicht dargestellten - Ausgestaltung gehören die Signalquelle 11 und das Lesegerät 6 zu einem Gerät. Es handelt sich somit beispielsweise um ein RFID-Lesegerät.

Die Erfindung ermöglicht somit in einer Ausgestaltung die Bereitstellung von Amplituden-und Phaseninformationen der empfangenen Signale der Sender 2 oder speziell RFID-Transponder, die durch ein oder mehrere Lesegeräte als entsprechende Informations-Lesevorrichtung 6 angeregt worden sind. Dies geschieht mit einer Mehrkeulenantenne als Antennenvorrichtung 3, deren Einzelelemente oder Antennenelemente 7 an ein Speisenetzwerk 8, wie eine Butler-Matrix, angeschlossen sind.

Solch ein Keulenformungsnetzwerk 8 besitzt in der Regel eine Vielzahl von Ein- bzw. Ausgängen. Durch Ansteuern mindestens einer dieser Tore 10 (also eines Ein- bzw. Ausgangs) prägt sich für den Sendefall eine bestimmt geformte Richtcharakteristik (Keule) 9 aus. Bei der Speisung der anderen Tore 10 ergibt sich jeweils eine andere Keulenform.

Unter Verwendung des Speisenetzwerks 8 wird ein Tor 10 der Antennenvorrichtung 3 mit der Signalquelle 11 (in einer alternativen - nicht dargestellten - Ausgestaltung wäre die Verbindung der Antennenvorrichtung 3 mit der Informations-Lesevorrichtung 6) verbunden, um mit der entsprechenden Richtcharakteristik 9 das Anregungssignals auszusenden. Dadurch werden die RFID-Transponder als Sender 2 angeregt. Die einfallenden Signale werden über das gleiche Tor (also über den Signalausgang) 10 abgegriffen und direkt dem RFID-Lesegerät als Ausgestaltung der Informations-Lesevorrichtung 6, vor allem im Wesentlichen ohne Signalleistungsverlust, zugeführt.

In einer Ausgestaltung ist dabei vorgesehen, dass unter Verwendung des Keulenformungsnetzwerks als Ausgestaltung des Speisenetzwerks 6 bei der Mehrkeulenantenne 3 zu jedem Zeitpunkt t lediglich eine Keule, d. h. nur eine Richtcharakteristik für den Sendefall ausgeprägt wird.

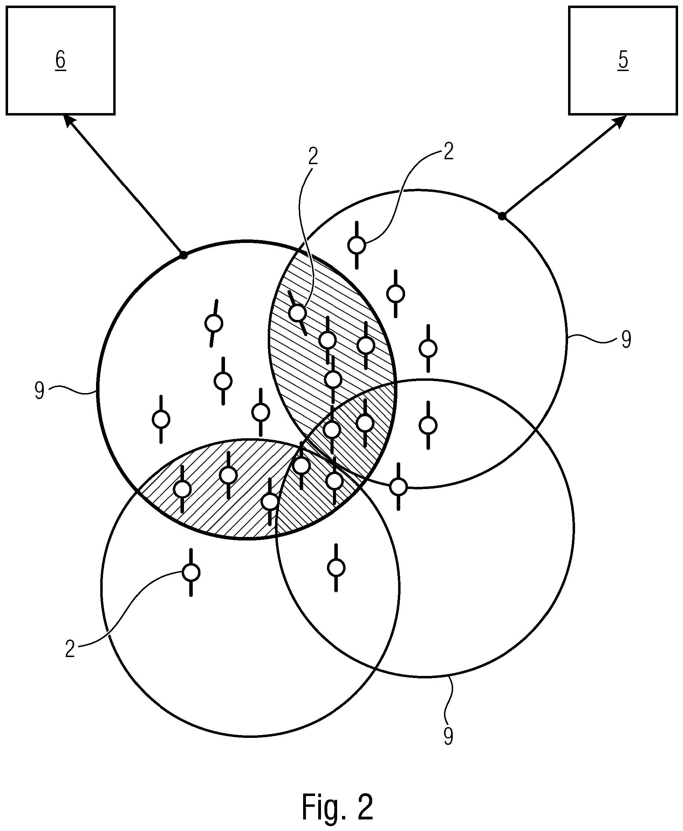

Im Empfangsfall liegen allerdings an den Toren 10 des Speisenetzwerks 8 die Signalinformationen aller Keulen, also aller Richtcharakteristiken vor. Da sich in der vorliegenden Ausgestaltung diese Keulen überlagern (siehe Fig. 2), befinden sich angeregte Transponder 2 auch in Teilabschnitten in mindestens einer der restlichen Empfangskeulen. Da solche ein Keulenformungsnetzwerk 8 in der Praxis nicht absolut symmetrisch ist, fallen ebenso kleine Singalanteile an den (m - 1) verbleibenden, nicht mit der Informations-Lesevorrichtung 6 verbundenen, m Toren 10 des Netzwerkes 8 ab. Ausgenutzt wird insbesondere die Überlappung der Beams. Dadurch fallen auch Signalanteile von Transpondern, welche durch den aktiven Beam (Tor mit Sende-/Lesevorrichtung) angeregt werden, an den verbleibenden Toren ab, die mit der Datenverarbeitungsvorrichtung 5 verbunden sind. Diese Signalinformationen werden einer direkt in der Mehrkeulenantenne 3 integrierten oder auch extern verfügbaren Elektronik (der Datenverarbeitungsvorrichtung 5) zur Richtungsschätzung zur Verfügung gestellt werden.

Durch eine geeignete Schaltlogik wird zwischen den Toren 10 des Keulenformungsnetzwerkes 8 in der gezeigten Ausgestaltung umgeschaltet. Das bedeutet, dass das RFID-Lesegerät 6 kontinuierlich mit allen, aber zum Zeitpunkt t nur mit einem der Eingänge 10 des Netzwerkes 8 verbunden ist. Entsprechend werden die verbleibenden Tore 10 zur Datenverarbeitungsvorrichtung 5 für die Richtungsschätzung ebenso umgeschaltet.

Dadurch liegen nach einem gewissen Zeitpunkt t1 in Abhängigkeit von der Anzahl der Antennenelemente 7 bzw. Richtcharakteristiken 9 und der Umschaltzeit eine Menge von Richtungsinformationen in Amplitude und Phase vor. Diese können dann verrechnet werden und somit eventuell auftretende Fehlinformationen durch Reflexionen und Mehrdeutigkeiten erkannt und berücksichtigt werden.

Durch solch eine Mehrkeulenantenne 3 mit entsprechendem Keulenformungsnetzwerk 8 ist der Lese- bzw. Sendepfad der Informations-Lesevorrichtung 6 nahezu nicht betroffen. Durch die Überlagerung der Keulen einer Mehrkeulenantenne werden auch Transponder angeregt, welche durch mindestens eine der benachbarten Keulen im Empfangsfall erkannt werden, siehe Fig. 2.

Die Signalinformationen können somit an den entkoppelten Toren 10 des Speisenetzwerkes 8, welche gerade nicht dem zu diesem Zeitpunkt direkten Signalpfad des Lesegeräts 6 entsprechen, abgenommen werden, ohne dass der Signalpfad des Lesegeräts 6 beeinflusst wird. Dies ist für die Reichweite des Lesegeräts und den einwandfreien Betrieb des Lesegeräts 6 zwingend erforderlich, denn die Leistung des zurückgesendeten Signals der passiven Transponder 2 ist sehr gering. Aus diesem Grund besitzen die Lesegeräte 6 eine hohe Signalempfindlichkeit.

Die Fig. 2 zeigt schematisch eine Vielzahl von Sendern 2 in Form von RFID-Transpondern. Die vier Kreise bezeichnen hier vier unterschiedliche Richtcharakteristiken 9. Die mit einer Richtcharakteristik 9 empfangenen Signale (starke Umrandung) werden der Informations-Lesevorrichtung 6 zugeführt (angedeutet durch den Pfeil). Dort werden aus den Signalen die übertragenen Signale und auch ein Wert für die Signalamplitude (der RSSI-Wert) ermittelt. Die mit den verbleibenden drei Richtcharakteristiken 9 empfangenen Signale werden der Datenverarbeitungsvorrichtung 5 zugeführt.

Zu erkennen ist, dass sich die Richtcharakteristiken 9 überlagern (schraffierter Bereich), so dass die Signale von einigen Sendern 2 für den Empfangsfall zu der Informations-Lesevorrichtung 6 gelangen und auch in Bezug auf die Position durch die Datenverarbeitungsvorrichtung 5 ausgewertet werden.

Die vorliegende Erfindung ermöglicht es, die Elektronik zur Richtungsschätzung direkt in der Antennenvorrichtung 3 zu integrieren. Damit ergibt sich der Vorteil, dass die Richtungsschätzung bzw. die Ermittlung der Information über die Position des Senders unabhängig von der verwendeten Informations-Lesevorrichtung 6 (also z. B. dem jeweiligen RFID-Lesegerät) wird. Zudem wird das empfangene Signal, das zu der Informations-Lesevorrichtung 6 geführt wird, kaum beeinflusst, da die anderen Antennenelemente 7 stets Signale empfangen und daher im Stand der Technik im Allgemeinen mit einem Abschlusswiderstand versehen sind. Bei der kompakten Integration in die Antennenvorrichtung 3 ist in einer Ausgestaltung überdies nur eine Signalleitung zur Informations-Lesevorrichtung 6 notwendig.

Die Erfindung ist für beliebige Frequenzen bzw. Frequenzbereiche geeignet, auch für optische Systeme ist das Konstrukt umsatzbar, z. B. durch Linsen.

Technische Anwendungsgebiete liegen im Bereich der Logistik. Dort ermöglicht die Erfindung die Verwaltung von Objekten innerhalb von Lagerhallen und Produktionsumgebungen. Auch ermöglicht die Erfindung die autonome Navigation von Flurförderfahrzeugen. Im Rahmen der Produktion erleichtert die Erfindung die Verwaltung von Werkstücken und Werkstückträgern. Im Bereich der Satellitenkommunikation ist ein automatisches Nachführen möglich, falls ein Satellit hinter dem Horizont verschwindet oder die empfangene Leistung für das Frontend zu gering für die Auswertung wird.

Für den letzteren Anwendungsfall sieht es eine Ausgestaltung vor, dass die Informations-Lesevorrichtung 6 über eine Richtcharakteristik in eine Richtung gelenkt ist. Die anderen Richtcharakteristiken bzw. die damit empfangenen Signale erlauben die Identifizierung von weiteren Satelliten sowie der Einschätzung ihrer Sendeleistungen durch die Amplituden der empfangenen Signale. Wird daher die Verbindung über die Richtcharakteristik, mit der die Informations-Lesevorrichtung 6 die Signale empfängt, schlechter, so kann auf eine andere Richtcharakteristik mit einem besseren Signalverhältnis gewechselt werden. Gleiches gilt auch für andere Szenarien mit mehreren oder ggf. bewegten Sendern.

Je nach bestimmten Implementierungsanforderungen können Ausführungsbeispiele der Erfindung in Hardware oder teilweise in Hardware oder teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind.

Deshalb kann das digitale Speichermedium computerlesbar sein.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen:

[1] Kalis et al., "Direction Finding in IEEE802.11 Wireless Networks", IEEE Transactions on Instrumentation and Measurement, vol. 51, no. 5, Seiten 940 - 948, 2002.
[2] B. N. Hood et al., "Estimating DoA From Radio-Frequency RSSI Measurements Using an Actuated Reflector, IEEE Sensors Journal, vol. 11, no. 2, Seiten 413 - 417, 2011.
[3] G. Giorgetti et al., "Single-Anchor Indoor Localization Using a Switched-Beam Antenna", IEEE Communications Letters, vol. 13, no. 1, Seiten 1 - 3, 2009.
[4] M. Passafiume et al., "On the duality of Phase-based and Phase-less RSSI MUSIC algorithm for Direction of Arrival estimation", Proc. of the 3rd International Conference on Circuits, Systems, Communications, Computers and Applications (CSCCA), Seiten 48 - 54, 2014.
[5] D. L. Nguyen, "Switched Beam Array Antenna for 2.45 GHz RFID Localisation", Dissertation, The University of Hull, 2011.
[6] Kathrein RFID KRAI Solutions EuroID_2013.pdf

## Patentansprüche

1. Vorrichtung (1) zur Bestimmung mindestens einer Information über eine Position eines Senders (2),
mit einer Antennenvorrichtung (3), einer Kontrollvorrichtung (4), einer Datenverarbeitungsvorrichtung (5) und einer Informations-Lesevorrichtung (6),
wobei die Antennenvorrichtung (3) mehrere unterschiedliche Richtcharakteristiken (9) aufweist,
wobei die Antennenvorrichtung (3) ein Speisenetzwerk (8) aufweist,
wobei das Speisenetzwerk (8) unterschiedliche Richtcharakteristiken (9) der Antennenvorrichtung (3) bewirkt und derartig ausgestaltet ist, mit der Antennenvorrichtung (3) empfangene Signale in die einzelnen Richtcharakteristiken (9) zu separieren,
wobei die Richtcharakteristiken (9) sich jeweils auf eine Menge an räumlich unterschiedlichen Empfangsempfindlichkeiten der Antennenvorrichtung (3) beziehen, wobei die Antennenvorrichtung (3) mehrere Signalausgänge (10) aufweist,
wobei die Richtcharakteristiken (9) den Signalausgängen (10) zugeordnet sind, wobei die Kontrollvorrichtung (4) derartig ausgestaltet ist, einen Signalausgang (10) der Antennenvorrichtung (3) mit der Informations-Lesevorrichtung (6) und weitere Signalausgänge (10) der Antennenvorrichtung (3) mit der Datenverarbeitungsvorrichtung (5) zu verbinden, und
wobei die Informations-Lesevorrichtung (6) derartig ausgestaltet ist, aus empfangenen Signalen mit den Signalen übertragene Daten zu ermitteln, und
wobei die Datenverarbeitungsvorrichtung (5) derartig ausgestaltet ist, die empfangenen Signale in Hinblick auf die Richtung des Senders (2), in welcher dieser relativ zur Antennenvorrichtung (3) positioniert ist, auszuwerten,
**dadurch gekennzeichnet, dass** die Kontrollvorrichtung (4) derartig ausgestaltet ist, die Informations-Lesevorrichtung (6) abwechselnd mit unterschiedlichen Signalausgängen (10) der Antennenvorrichtung (3) und jeweils weitere Signalausgänge (10) der Antennenvorrichtung (3) mit der Datenverarbeitungsvorrichtung (5) zu verbinden.

2. Vorrichtung (1) nach Anspruch 1,
wobei die Vorrichtung (1) die Informations-Lesevorrichtung (6) als Komponente aufweist.

3. Vorrichtung (1) nach Anspruch 1 oder 2,
wobei die Informations-Lesevorrichtung (6) derartig ausgestaltet ist, sowohl aus den empfangenen Signalen die mit den Signalen übertragenen Daten zu ermitteln als auch die empfangenen Signal hinsichtlich ihrer physikalischen Eigenschaften auszuwerten.

4. Vorrichtung (1) nach einem der Ansprüche 1 bis 3,
wobei die Antennenvorrichtung (3) mehrere Antennenelemente (7) aufweist, wobei die Antennenelemente (7) jeweils eine Richtcharakteristik (9) aufweisen, und
wobei die Signalausgänge (10) mit unterschiedlichen Antennenelementen (7) verbunden sind.

5. Vorrichtung (1) nach einem der Ansprüche 1 bis 4,
wobei die Antennenvorrichtung (3) als Mehrkeulenantenne ausgestaltet ist, und wobei die Richtungscharakteristiken (9) sich zumindest in Hinblick auf die Ausrichtung der Keulen voneinander unterscheiden.

6. Vorrichtung (1) nach einem der Ansprüche 1 bis 5,
wobei die Richtungscharakteristiken (9) sich teilweise überlappen.

7. Vorrichtung (1) nach einem der Ansprüche 1 bis 6,
wobei die Vorrichtung (1) eine Signalquelle (11) aufweist, und
wobei die Signalquelle (11) derartig ausgestaltet ist, ein Anregungssignal zu erzeugen, das die Antennenvorrichtung (3) abstrahlt.

8. Vorrichtung (1) nach einem der Ansprüche 1 bis 7,
wobei es sich bei dem Sender (2) um einen Radio Frequency Identifikation (RFID)-Transponder handelt, und
wobei es sich bei der Informations-Lesevorrichtung (6) um einen Radio Frequency Identifikation (RFID)-Reader handelt.

9. Vorrichtung (1) nach einem der Ansprüche 1 bis 8,
wobei die Datenverarbeitungsvorrichtung (5) ferner ausgestaltet ist, die empfangenen Signale in Hinblick auf die Position oder einen Raumbereich des Senders (2) auszuwerten.

## Claims

1. Apparatus (1) for determining at least one piece of information on a position of a transmitter (2),
comprising an antenna apparatus (3), a control apparatus (4) a data processing apparatus (5) and an information reading apparatus (6),
wherein the antenna apparatus (3) comprises several different directional characteristics (9),
wherein the antenna apparatus (3) comprises a feed network (8),
wherein the feed network (8) effects different directional characteristics (9) of the antenna apparatus (3) and is configured to separate signals received with the antenna apparatus (3) into the individual directional characteristics (9).
wherein the directional characteristics (9) each relate to an amount of spatially different receive sensitivities of the antenna apparatus (3),
wherein the antenna apparatus (3) comprises several signal outputs (10),
wherein the directional characteristics (9) are allocated to the signal outputs (10),
wherein the control apparatus (4) is configured to connect one signal output (10) of the antenna apparatus (3) to the information reading apparatus (6), and to connect further signal outputs (10) of the antenna apparatus (3) to the data processing apparatus (5),
wherein the information reading apparatus (6) is configured to determine data from received signals that are transmitted with the signals and
wherein the data processing apparatus (5) is configured to evaluate the received signals with respect to the direction of the transmitter (2) in which the same is positioned relative to the antenna apparatus (3),
**characterized in that** the control apparatus (4) is configured to connect the information reading apparatus alternately to different signal outputs (10) of the antenna apparatus (3), and to connect further signal outputs (10) of the antenna apparatus (3) to the data processing apparatus (5).

2. Apparatus (1) according to claim 1,
wherein the apparatus (1) comprises the information reading apparatus (6) as a component.

3. Apparatus (1) according to claim 1 or 2,
wherein the information reading apparatus (6) is configured to determine from the received signals the data transmitted with the signals and to evaluate the received signals with respect to their physical characteristics.

4. Apparatus (1) according to claims 1 to 3,
wherein the antenna apparatus (3) comprises several antenna elements (7),
wherein the antenna elements (7) comprise one directional characteristic (9) each, and
wherein the signal outputs (10) are connected to different antenna elements (7).

5. Apparatus (1) according to claims 1 to 4,
wherein the antenna apparatus (3) is configured as multi-beam antenna, and
wherein the directional characteristics (9) differ from one another at least with respect to the orientation of the beams.

6. Apparatus (1) according to claims 1 to 5,
wherein the directional characteristics (9) partly overlap.

7. Apparatus (1) according to claims 1 to 6,
wherein the apparatus (1) comprises a signal source (11), and
wherein the signal source (11) is configured to generate an excitation signal that is radiated by the antenna apparatus (3).

8. Apparatus (1) according to claims 1 to 7,
wherein the transmitter (2) is a radio frequency identification, RFID, transponder, and
wherein the information reading apparatus (6) is a radio frequency identification, RFID, reader.

9. Apparatus (1) according to claims 1 to 8,
wherein the data processing apparatus (5) is configured to evaluate the received signals with respect to the position or a spatial area of the transmitter (2).

## Revendications

1. Dispositif (1) pour déterminer au moins une information sur une position d'un émetteur (2),
avec un dispositif d'antenne (3), un dispositif de contrôle (4), un dispositif de traitement de données (5) et un dispositif de lecture d'informations (6),
dans lequel le dispositif d'antenne (3) présente plusieurs caractéristiques directionnelles (9) différentes,
dans lequel le dispositif d'antenne (3) présente un réseau d'alimentation (8),
dans lequel le réseau d'alimentation (8) entraîne différentes caractéristiques directionnelles (9) du dispositif d'antenne (3) et est conçu pour séparer les signaux reçus par le dispositif d'antenne (3) en caractéristiques directionnelles (9) individuelles,
dans lequel les caractéristiques directionnelles (9) se rapportent, chacune, à une quantité de sensibilités de réception spatialement différentes du dispositif d'antenne (3),
dans lequel le dispositif d'antenne (3) présente une pluralité de sorties de signal (10),
dans lequel les caractéristiques directionnelles (9) sont associées aux sorties de signal (10),
dans lequel le dispositif de contrôle (4) est conçu pour connecter une sortie de signal (10) du dispositif d'antenne (3) au dispositif de lecture d'informations (6) et d'autres sorties de signal (10) du dispositif d'antenne (3) au dispositif de traitement de données (5), et
dans lequel le dispositif de lecture d'informations (6) est conçu pour déterminer, à partir des signaux reçus, les données transmises par les signaux, et
dans lequel le dispositif de traitement de données (5) est conçu pour évaluer les signaux reçus en ce qui concerne la direction de l'émetteur (2) dans laquelle est positionné ce dernier par rapport au dispositif d'antenne (3),
**caractérisé par le fait que** le dispositif de contrôle (4) est conçu pour connecter le dispositif de lecture d'informations (6) en alternance à différentes sorties de signal (10) du dispositif d'antenne (3) et respectivement d'autres sorties de signal (10) du dispositif d'antenne (3) au dispositif de traitement de données (5).

2. Dispositif (1) selon la revendication 1,
dans lequel le dispositif (1) présente le dispositif de lecture d'informations (6) comme composant.

3. Dispositif (1) selon la revendication 1 ou 2,
dans lequel le dispositif de lecture d'informations (6) est conçu tant pour déterminer, à partir des signaux reçus, les données transmises par les signaux que pour évaluer les signaux reçus en ce qui concerne leurs propriétés physiques.

4. Dispositif (1) selon l'une des revendications 1 à 3,
dans lequel le dispositif d'antenne (3) présente plusieurs éléments d'antenne (7),
dans lequel les éléments d'antenne (7) présentent, chacun, une caractéristique directionnelle (9), et
dans lequel les sorties de signal (10) sont connectées à différents éléments d'antenne (7).

5. Dispositif (1) selon l'une des revendications 1 à 4,
dans lequel le dispositif d'antenne (3) est conçu comme une antenne à lobes multiples, et
dans lequel les caractéristiques directionnelles (9) diffèrent l'une de l'autre au moins en ce qui concerne l'orientation des lobes.

6. Dispositif (1) selon l'une des revendications 1 à 5,
dans lequel les caractéristiques directionnelles (9) se chevauchent partiellement.

7. Dispositif (1) selon l'une des revendications 1 à 6,
dans lequel le dispositif (1) présente une source de signal (11), et
dans lequel la source de signal (11) est conçue pour générer un signal d'excitation que le dispositif d'antenne (3) émet.

8. Dispositif (1) selon l'une des revendications 1 à 7,
dans lequel il s'agit, pour l'émetteur (2), d'un transpondeur d'identification par radiofréquences (RFID), et
dans lequel il s'agit, pour le dispositif de lecture d'informations (6), d'un lecteur d'identification par radiofréquences (RFID).

9. Dispositif (1) selon l'une des revendications 1 à 8,
dans lequel le dispositif de traitement de données (5) est par ailleurs conçu pour évaluer les signaux reçus en ce qui concerne la position ou une zone spatiale de l'émetteur (2).
